Europäisches Patentamt

(19) European Patent Office

Office européen des brevets

(11) EP 1 187 385 A1

(12) **EUROPEAN PATENT APPLICATION**

(43) Date of publication:
**13.03.2002 Bulletin 2002/11**

(51) Int Cl.7: **H04L 1/00**, H04L 1/06,
H04L 7/06, H04L 7/08

(21) Application number: **01302472.4**

(22) Date of filing: **19.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **12.09.2000 US 660096**

(71) Applicant: **LUCENT TECHNOLOGIES INC.**
**Murray Hill, New Jersey 07974-0636 (US)**

(72) Inventors:
 • **Kogiantis, Achilles George**
  **Madison, New Jersey 07940 (US)**

 • **Sunay, Mehmet Oguz**
  **New Jersey 07901 (US)**
 • **Viswanathan, Harish**
  **Basking Ridge, New Jersey 07920 (US)**

(74) Representative:
 **Buckley, Christopher Simon Thirsk et al**
 **Lucent Technologies (UK) Ltd,**
 **5 Mornington Road**
 **Woodford Green, Essex IG8 0TU (GB)**

(54) **Signalling of data rate and diversity configuration**

(57)    An efficient method of controlling data transmission in a communication channel is provided. A base station receives a message containing at least two sets of bits. The first set of bits is a plurality of bits specifying a data rate, and the second set of bits specifies a transmit configuration. The second set of bits contains at least one bit. A subset of possible transmit configurations is identified based on the data rate specified in the first set of bits. The second set of bits is used to select a transmit configuration from the subset of transmit configurations. Additionally, the base station transmits at least one bit to the mobile station specifying a data packet size.

EP 1 187 385 A1

# Description

## Background of the Invention

### 1. Field of the Invention

The present invention relates to communications; more specifically, wireless communications.

### 2. Description of the Related Art

Prior communication systems controlled data transmission from a base station to a mobile station using a data rate received in a message from the mobile station at the base station. Based on channel conditions such as carrier to interference ratio or signal to noise ratio, the mobile transmitted a message to the base station specifying one of 16 data rates using four bits to specify. There is a need to provide more detailed transmission requests using a minimum of bandwidth.

## Summary of the Invention

The present invention provides an efficient method of controlling data transmission in a communication channel. A base station receives a message containing at least two sets of bits. The first set of bits is a plurality of bits specifying a data rate, and the second set of bits specifies a transmit configuration. The second set of bits contains at least one bit. A subset of possible transmit configurations is identified based on the data rate specified in the first set of bits. The second set of bits is used to select a transmit configuration from the subset of transmit configurations. Additionally, the base station transmits at least one bit to the mobile station specifying a data packet size.

## Brief Description of the Drawings

FIG. 1 illustrates a single transmit antenna configuration;
FIG. 2 illustrates a selective transmit diversity configuration;
FIG. 3 illustrates a space time spreading configuration;
FIG. 4 illustrates a multi-output and multi-input configuration; and
FIG. 5 illustrates using a data rate to identify a transmit configuration subset.

## Detailed Description

In an illustrative system, transmission periods to mobile stations are divided into slots which are used to communicate with one mobile station at a time. Data transmitted to a mobile station is divided into packets of commonly encoded data that is transmitted over one or more slots. Based on the amount of data in a queue associated with a particular mobile station, a packet size is selected for use in transmitting data to that mobile station. The base station may select from two or more packet sizes in order to use the transmission slots efficiently. The packet size selected by the base station is communicated to the mobile station in a message containing at least one bit.

In addition to the base station selecting the packet size, the data transmission in the communication channel is controlled using a message received from the mobile station. The mobile station sends a message to the base station requesting a particular data transmission rate and a particular transmit configuration. The mobile sends this message based on channel conditions such as carrier to interference ratio ($\frac{C}{I}$), signal to noise ratio ($\frac{S}{N}$), the mobile station's degree of mobility (whether the mobile is standing still, moving slowly or moving at a relatively high speed) and the transmit configurations supported by the mobile.

In one embodiment, the message specifies one of 16 possible data rates and one of four possible transmit configurations using five bits. The five bits consist of two sets of bits where the first set specifies the data rate and the second set specifies the transmit configuration. In this example, the first four bits specify the transmission rate and the fifth bit specifies the transmit configuration. The data rate specified by the first set of bits identifies a subset of the transmit configurations. In this case, the data rate identifies a subset of two transmit configurations out of four possible transmit configurations; the fifth bit is then used to select one of the two transmit configurations in the subset of transmit configurations.

In one embodiment, a selection of four possible transmit configurations such as a single transmit antenna configuration, a selective transmit diversity configuration, a space time spreading configuration and a multi-input/multi-output configuration are provided. The use of these four configurations is provided for instructional purposes. Different numbers and different types of configurations may be used.

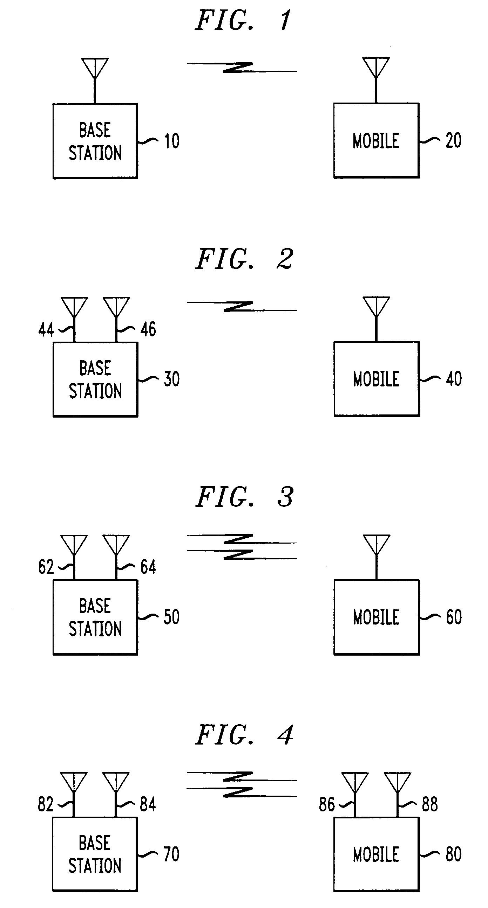

FIG. 1 illustrates a single transmit antenna configuration. Base station 10 communicates with mobile 20 using a single antenna at both the base station and mobile station. This configuration may be the default configuration and is typically assigned when the mobile has a high degree of mobility. High degrees of mobility correspond to times such as when the mobile station is in a motor vehicle or a train.

FIG. 2 illustrates a selective transmit configuration. In this configuration, base station 30 communicates with mobile station 40 using one of multiple transmit antennas and one antenna at the mobile station. Communications are tested using each of antennas 44 and 46, and then the mobile reports to the base station which of the two antennas provided superior communications. Superior communications may be determined using factors such as carrier to interference ratios, signal to noise ratios or error rates. This configuration is typically used when there are poor channel conditions such as low carrier to interference ratio and the mobile has a low level of mobility. Low mobility corresponds to situations such as the mobile being stationary or being carried by a user as he or she walks.

FIG. 3 illustrates a space time spreading configuration. Base station 50 communicates with mobile station 60 using at least two transmit antennas at the base station simultaneously and one receive antenna at the mobile station. In this configuration each of the transmit antennas uses a different Walsh code for the data that is transmitted through the antenna. In the case of two antennas as illustrated in the figure, antennas 62 and 64 carry data encoded with different orthogonal codes such as Walsh codes. This type of configuration is typically used in situations where channel conditions are good; that is, the carrier to interference ratio or signal to noise ratio is high and the mobility of the mobile station is low.

FIG. 4 illustrates a multi-input/multi-output transmit configuration. In this configuration base station 70 transmits to mobile station 80 using at least two transmit antennas and mobile station 80 receives the signals using at least two receive antennas. In this configuration data is simultaneously transmitted on antennas 82 and 84, and it is received by antennas 86 and 88. This type of configuration is typically used where there are good channel conditions such as a high carrier to interference ratio or signal to noise ratio, where the mobility of the mobile station is low, and where the mobile station has multiple receive antennas.

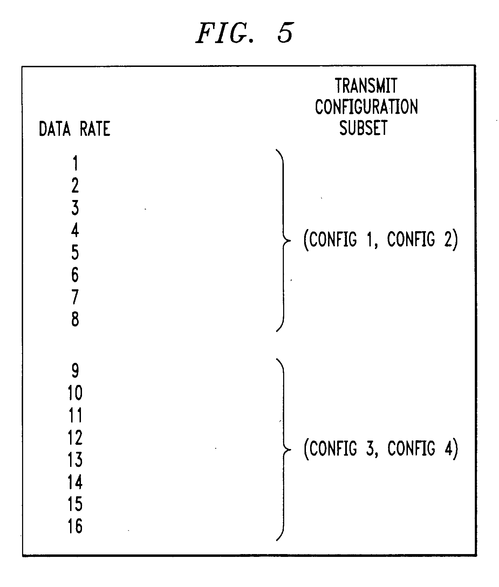

FIG. 5 illustrates data rates specifying subsets of transmit configurations. In this example, 16 possible data rates are divided into two groups that each identify a subset of transmit configurations. The group associated with data rates 1-8 identify transmit configuration subsets containing transmit configurations 1 and 2. As an example, transmit configurations 1 and 2 may be a single transmit antenna configuration and a select transmit diversity, respectively. Data rates 9-16 identify another subset of transmit configurations containing transmit configurations 3 and 4. For example, transmit configurations 3 and 4 may correspond to a space time spreading configuration and a multi-input/multi-output configuration. Other types of groupings may be used. For example, groups of three or four data rates may be used to identify a transmit configuration subset. It is also possible for each data rate to specify a different transmit configuration subset. The transmit configuration subsets may consist of any number of transmit configurations that may be specified using the number of bits in the second group of bits received in a message from a mobile station.

**Claims**

1. A method for controlling data transmission in a communication channel, **characterized by** the steps of:

   receiving a message having at least two sets of bits, the first set of bits being a plurality of bits specifying a data rate and the second set of bits specifying a transmit configuration, the second set of bits being a set having at least one bit; identifying a subset of possible transmit configurations based on the data rate specified by the first set of bits; and selecting a transmit configuration from the subset based on the second set of bits.

2. The method of claim 1, further comprising the steps of:

   selecting one of at least two data packet sizes; and transmitting at least one bit specifying a selected data packet size.

3. The method of claim 2, **characterized in that** the step of selecting one of at least two data packet sizes comprises selecting based on an amount of data in a queue associated with a mobile station.

4. The method of claim 3, **characterized in that** a large amount of data in the queue results in a selection of a larger data packet size.

5. The method of claim 1, **characterized in that** the first set of bits is a four bit set and the second set of bits is a one bit set.

*FIG. 1*

*FIG. 2*

*FIG. 3*

*FIG. 4*

## FIG. 5

| DATA RATE | TRANSMIT CONFIGURATION SUBSET |
|-----------|-------------------------------|
| 1 | |
| 2 | |
| 3 | |
| 4 | (CONFIG 1, CONFIG 2) |
| 5 | |
| 6 | |
| 7 | |
| 8 | |
| 9 | |
| 10 | |
| 11 | |
| 12 | (CONFIG 3, CONFIG 4) |
| 13 | |
| 14 | |
| 15 | |
| 16 | |

**European Patent Office**

# PARTIAL EUROPEAN SEARCH REPORT

**Application Number**

which under Rule 45 of the European Patent Convention shall be considered, for the purposes of subsequent proceedings, as the European search report

EP 01 30 2472

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 62212 A (PHILIPS) 2 December 1999 (1999-12-02) * figure 2; table 1 * | 1-5 | H04L1/00 H04L1/06 H04L7/06 H04L7/08 |
| X | WO 00 36781 A (SIEMENS) 22 June 2000 (2000-06-22) * page 3, line 16 - line 20 * * page 15, line 9 - line 16 * * page 4, line 1 - line 8 * | 1-5 | |
| X | US 5 859 875 A (HIDEKI KATO ET AL.) 12 January 1999 (1999-01-12) * abstract * * column 1, line 40 - line 47 * * column 2, line 20 - line 26 * * column 2, line 43 - line 45 * | 1-5 | |
| X | EP 0 966 125 A (MOTOROLA) 22 December 1999 (1999-12-22) * page 5, line 31 - line 48 * | 1-5 | |
| A | WO 99 67962 A (SAMSUNG) 29 December 1999 (1999-12-29) * abstract * | 1 | TECHNICAL FIELDS SEARCHED (Int.Cl.7) H04L H04B |

-/--

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 13 November 2001 | Scriven, P |

EPO FORM 1503 03.82 (P04C07)

<table>
<tr><td>**European Patent Office**</td><td>**INCOMPLETE SEARCH SHEET C**</td><td>Application Number<br>EP 01 30 2472</td></tr>
</table>

Claim(s) searched incompletely:
    1-5

Reason for the limitation of the search:

The present claims relate to an extremely large number of possible methods. Support, within the meaning of Article 84 EPC, and disclosure, within the meaning of Article 83 EPC, can found for only a very small proportion of the methods. In the present case, the claims so lack support, and the application so lacks disclosure, that a meaningful search over the whole of the claimed scope is impossible. Consequently, the search has been carried out for those parts of the claims which are supported and disclosed, namely those parts relating to the methods in which "transmit configuration" refers to the spatial diversity arrangments, which are set forth in the description.

**European Patent Office**

## PARTIAL EUROPEAN SEARCH REPORT

Application Number

EP 01 30 2472

| | DOCUMENTS CONSIDERED TO BE RELEVANT | | CLASSIFICATION OF THE APPLICATION (Int.Cl.7) |
|---|---|---|---|
| Category | Citation of document with indication, where appropriate, of relevant passages | Relevant to claim | |
| A | WO 99 14973 A (NOKIA) 25 March 1999 (1999-03-25) * abstract * | 2-5 | |
| A,P | WO 00 72465 A (NOKIA) 30 November 2000 (2000-11-30) * abstract * | 1-5 | |
| | | | **TECHNICAL FIELDS SEARCHED** (Int.Cl.7) |

EPO FORM 1503 03.82 (P04C10)

8

## ANNEX TO THE EUROPEAN SEARCH REPORT
## ON EUROPEAN PATENT APPLICATION NO.

EP 01 30 2472

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2001

| Patent document cited in search report | | Publication date | Patent family member(s) | | Publication date |
|---|---|---|---|---|---|
| WO 9962212 | A | 02-12-1999 | CN | 1272271 T | 01-11-2000 |
| | | | EP | 1000479 A2 | 17-05-2000 |
| | | | WO | 9962212 A2 | 02-12-1999 |
| WO 0036781 | A | 22-06-2000 | WO | 0036781 A1 | 22-06-2000 |
| | | | EP | 1142185 A1 | 10-10-2001 |
| US 5859875 | A | 12-01-1999 | JP | 2846860 B2 | 13-01-1999 |
| | | | JP | 10107685 A | 24-04-1998 |
| EP 0966125 | A | 22-12-1999 | EP | 0966125 A1 | 22-12-1999 |
| | | | JP | 2000069570 A | 03-03-2000 |
| WO 9967962 | A | 29-12-1999 | AU | 4655099 A | 10-01-2000 |
| | | | BR | 9906498 A | 26-09-2000 |
| | | | CN | 1272293 T | 01-11-2000 |
| | | | EP | 1005768 A1 | 07-06-2000 |
| | | | WO | 9967962 A1 | 29-12-1999 |
| WO 9914973 | A | 25-03-1999 | FI | 973717 A | 18-03-1999 |
| | | | AU | 9267998 A | 05-04-1999 |
| | | | CN | 1213257 A | 07-04-1999 |
| | | | EP | 0942550 A1 | 15-09-1999 |
| | | | WO | 9914973 A2 | 25-03-1999 |
| | | | JP | 2001517048 T | 02-10-2001 |
| | | | US | 6289217 B1 | 11-09-2001 |
| WO 0072465 | A | 30-11-2000 | WO | 0072464 A1 | 30-11-2000 |
| | | | AU | 2548200 A | 12-12-2000 |
| | | | AU | 4144799 A | 12-12-2000 |
| | | | CN | 1304587 T | 18-07-2001 |
| | | | WO | 0072465 A1 | 30-11-2000 |
| | | | EP | 1097525 A1 | 09-05-2001 |
| | | | NO | 20010290 A | 18-01-2001 |